# EUROPÄISCHE PATENTSCHRIFT

(11) **EP 1 587 275 B1**
(45) Veröffentlichungstag und Bekanntmachung des Hinweises auf die Patenterteilung: **23.05.2012**
(21) Anmeldenummer: 05007848.4
(22) Anmeldetag: 11.04.2005
(51) Int. Cl.: H04N 7/24, H04L 29/06

(54) **Netzwerk mit flexiblem Multimedia Data Routing**
Network with flexible multimedia data routing
Réseau à acheminament flexible de données multimédia

(30) Priorität: 13.04.2004 DE 102004018312
(43) Veröffentlichungstag der Anmeldung: 19.10.2005
(73) Patentinhaber: SMSC Europe GmbH, 76185 Karlsruhe (DE)
(72) Erfinder: Hetzel, Herbert, 76889 Schweigen-Rechtenbach (DE); Thiel, Christian, Dr., 83098 Brannenburg (DE); Klos, Rainer, 76275 Ettlingen-Oberweier (DE); Becker, Claudius, 76698 Ubstadt-Weiher (DE)
(74) Vertreter: Lohr, Georg

(56) Entgegenhaltungen:
- US-A1- 2002 015 442
- US-A1- 2003 229 902
- MOST COOPERATION: "MOST Specification Framework Rev 1.1 passage" MOST SPECIFICATION FRAMEWORK, 1999, Seiten 1-60, XP002259198
- OASIS SILICONSYSTEMS: "DVDPlayer 4 MOST User Manual V1.2.0" MOST MEDIA ORIENTED SYSTEMS TRANSPORT, [Online] 13. Oktober 2003 (2003-10-13), Seiten 1-96, XP002339093 Gefunden im Internet: URL:http://www.oasis.de/files/rapidprototy pingtools/UM_DVDPlayer_4_MOST_V01_02_00-0. pdf> [gefunden am 2005-08-03]
- OASIS SILICONSYSTEMS: "Amplifier 4 MOST Version: 2.0 User Manual" MOST MEDIA ORIENTED SYSTEMS TRANSPORT, [Online] 23. Juli 2003 (2003-07-23), Seiten 1-28, XP002339094 Gefunden im Internet: URL:http://www.oasis.de/files/rapidprototy pingtools/UM_Amplifier4MOST_V_02_00_03.pdf > [gefunden am 2005-08-03]
- OASIS SILICONSYSTEMS: "VideoCompresor 4 MOST Technical Information Rev. 3.0" MOST MEDIA ORIENTED SYSTEMS TRANSPORT, [Online] 25. Juli 2002 (2002-07-25), Seiten 1-20, XP002339095 Gefunden im Internet: URL:http://www.oasis.de/files/rapidprototy pingtools/VideoCompressor_4_MOST_3V0.pdf> [gefunden am 2005-08-03]
- OASIS SILICONSYSTEMS: "RadioTuner 4 MOST V1.0.0 User Manual" MOST MEDIA ORIENTED SYSTEMS TRANSPORT, [Online] 22. August 2003 (2003-08-22), Seiten 1-100, XP002339096 Gefunden im Internet: URL:http://www.oasis.de/files/rapidprototy pingtools/UM_RadioTuner_4_MOST_V01_00_00-0 .pdf> [gefunden am 2005-08-03]
- TAPPE R ET AL: "MOST - Media Oriented Systems Transport" ELEKTRONIK, [Magnetband] 11. Juli 2000 (2000-07-11), Seiten 3-8, XP002339097 Gefunden im Internet: URL:http://www.mostnet.de/news/Brochures+& +Publications/2000/1/13/files/Elektronik_1 4_2000.pdf> [gefunden am 2005-08-02]

## Beschreibung

### Technisches Gebiet

Die Erfindung betrifft ein Netzwerk sowie ein Netzwerkinterface und ein Verfahren zum Betrieb eines Netzwerks zur Distribution für Streamingdaten und insbesondere Multimedia- Daten sowie verwandter Dienste.

### Stand der Technik

Bei modernen Multimedia- fähigen Netzwerken mit einer Vielzahl unterschiedlicher Teilnehmer insbesondere in Fahrzeugen oder Gebäuden wird von den Anwendern immer stärker eine Plug and Play- Funktionalität gefordert. Dies bedeutet, dass unterschiedliche Multimedia-Geräte auf einfache Weise, d.h. ohne weitere Interaktion des Anwenders an ein Bussystem angeschlossen werden können. Weiterhin sollten auch zukünftige Geräte mit heute noch nicht bekannten Funktionalitäten an das Bussystem anschließbar sein.

So ist in der WO 01/56297 ein Distributionssystem für Satellitenfernsehsignale über ein drahtloses Netzwerk (Wireless LAN) offenbart. Eine mit der Satellitenantenne verbundene Set-Top-Box weist für jeden angeschlossenen Fernsehempfänger einen eigenen Demodulator auf. Dieser Demodulator setzt die vom Satelliten empfangenen Signale eines durch den Fernsehempfänger ausgewählten Fernsehkanals in digitale Daten um und überträgt diese an den Fernsehempfänger. Durch diese Punkt- zu- Punkt-Kommunikation kann der Fernsehempfänger den ihm zugeordneten Demodulator der Set-Top-Box direkt ansteuern und erhält von diesem dann das entsprechende Fernsehprogramm. Durch die vorgegebene Anzahl von Fernsehempfängern ergibt sich ein definierter Bandbreitenbedarf des Netzwerks.

Allerdings können an die Set-Top-Box nur so viele Fernsehempfänger angeschlossen werden, wie in dieser Demodulatoren vorhanden sind. Daher sind der Erweiterung des Systems enge Grenzen gesetzt. Eine Erweiterung mit fremden Geräten, wie z.B. einem DVD- Player ist nicht möglich. Ebenso werden auch keine zukünftigen Multimedia-Geräte an das Bussystem anschließbar sein.

In der DE 196 51 308 C2 ist ein Audio-Soundsystem für ein Kraftfahrzeug offenbart. Dieses Soundsystem weist mehrere Einheiten zur Eingabe bzw. Ausgabe von Daten auf. Die Einheiten weisen einen Speicher auf, in dem der Funktionsumfang der Einheit dargestellt ist. Dieser Speicher wird von der zentralen Steuereinheit abgefragt, um den Funktionsumfang des Gesamtsystems zu ermitteln. Aufgrund dieses ermittelten Funktionsumfangs erfolgt nun eine Steuerung bzw. Aktivierung oder auch Deaktivierung der einzelnen Einheiten durch die zentrale Steuereinheit. Diese Anordnung ist von der zentralen Steuereinheit abhängig und kann ohne diese nicht funktionieren.

In "MOST Specification Framework Rev 1.1", MOST COOPERATION, 1999 ist ein digitales Netzwerk zur Kommunikation mehrerer Teilnehmer mittels Streamingdaten in allgemeiner Form offenbart. Ein Plug and Play Mechanismus ist nicht beschrieben.

In "DVDPlayer4MOST User Manual Version 1.2.0", OASIS SILICONSYSTEMS, 13. Oktober 2003 ist ein netzwerkfähiger DVD Spieler beschrieben. Hinweise auf einen Plug and Play Mechanismus und insbesondere auf die Fähigkeit zur Aussendung von Broadcasts oder Multicasts sind nicht vorhanden. Gleiches gilt für den in "RadioTuner4MOST Version 1.0.0 User Manual", OASIS SILICONSYSTEMS, 22.08.2003 offenbarten netzwerkfähigen Radio Tuner.

In "Amplifier4MOST Version 2.0 User Manual", OASIS SILICONSYSTEMS, 23.07.2003 ist ein netzwerkfähiger Verstärker offenbart. Ein Plug and Play Mechanismus ist nicht vorgesehen. So muss mit Hilfe einer externen Steuereinheit eine Verbindung zu einer Datenquelle aufgebaut werden.

In "VideoCompressor4MOST Technical Information Rev. 3.0", OASIS SILICON SYSTEMS, 25.07.2002 ist ein netzwerkfähiger Videokompressor offenbart, wobei auch hier keine Plug and Play Funktionalität vorhanden ist.

### Darstellung der Erfindung

Der Erfindung liegt die Aufgabe zugrunde, ein Multimedia- fähiges Netzwerk derart zu gestalten, dass unterschiedliche, multimedia- fähige Geräte auf einfache Weise, an das Bussystem angeschlossen werden können, ohne dass eine zentrale Steuereinheit benötigt wird. Bevorzugt soll ein Anschluss ohne weitere Eingriffe eines Benutzers möglich sein.

Eine erfindungsgemäße Lösung dieser Aufgabe ist in den unabhängigen Patentansprüchen angegeben. Weiterbildungen der Erfindung sind Gegenstand der abhängigen Ansprüche.

Ein erfindungsgemäßes durch Anspruch 1 definiertes digitales Netzwerk dient zur Kommunikation mehrerer Teilnehmer (Netzwerkknoten) mittels Streamingdaten. Unter Streamingdaten werden hier Daten verstanden, welche in einem echtzeitfähigen Datenstrom über das Netzwerk übertragen werden. Diese Streamingdaten dienen vorzugsweise zur Übertragung von Multimediadaten, wie beispielsweise Audio- oder Videosignalen. Das Netzwerk umfasst verschiedene Teilnehmer, wobei wenigstens ein Teilnehmer zur Aussendung von Daten ausgebildet ist (Sender) und wenigstens ein weiterer Teilnehmer zum Empfang von Daten (Empfänger) ausgebildet ist. Wenigstens ein Teilnehmer als Sender ist derart ausgebildet, dass er automatisch Streamingdaten an das Netzwerk aussendet, sobald er an dieses angeschlossen oder aktiviert wurde. Die Aussendung dieser Streamingdaten erfolgt vorzugsweise als Broadcast oder Multicast. Weiterhin ist wenigstens ein Teilnehmer als Empfänger derart ausgebildet, dass er nachdem er an das Netzwerk angeschlossen wurde bzw. aktiviert wurde Streamingdaten vom Netzwerk liest. Hierzu selektiert er aus den auf dem Netzwerk verfügbaren Streamingdaten solche Daten, welche mit dem Empfänger kompatibel sind und somit vom Empfänger weiterverarbeitet werden können.

Dies bedeutet, dass ein Teilnehmer als Sender bzw. ein Sender nach dem Anschluss an das Netzwerk mit der ungerichteten Aussendung von Streamingdaten in das Netzwerk beginnt. Somit sind beliebige Sender auf einfachste Weise an das Netzwerk anschließbar. Sie beginnen selbstständig nach dem Anschluss an das Netzwerk mit der Aussendung von Daten. So wird beispielsweise ein CD-Player mit der Aussendung der aufgezeichneten Musik in das Netzwerk beginnen. Ebenso könnte ein DVD- Player mit dem Abspielen eines aufgezeichneten Videos beginnen und dieses in das Netzwerk einspeisen. Ein Rundfunkempfänger könnte unmittelbar nach dem Anschluss mit der Einspeisung eines voreingestellten Programms beginnen. Entsprechend ein Teilnehmer als Empfänger bzw. ein Empfänger mit dem Empfang von Streamingdaten des Netzwerks, sobald dieser an das Netzwerk angeschlossen bzw. aktiviert wurde. Hierzu werden aus dem Datenverkehr des Netzwerks mit dem Empfänger kompatible Datenströme ausgewählt und ausgewertet. Durch diese Ausgestaltung können auf einfache Weise verteilte Netzwerke zusammengestellt werden und auch im Betrieb des Netzwerkes einzelne Teilnehmer hinzugefügt oder entfernt werden, ohne das Netzwerk herunterzufahren oder neu zu konfigurieren. Weiterhin ist keine zentrale Verwaltung des Netzwerkes notwendig.

Die Aktivierung eines Netzwerkteilnehmers kann beispielsweise automatisch durch den Vorgang des Anschließens, durch Anlegen einer Versorgungsspannung oder durch ein Aktivierungssignal erfolgen wobei die Aktivierung der Netzwerkteilnehmer der Erfindung automatisch durch den Vorgang des Anschließens an das Netzwerk oder durch Anlegen einer Versorgungsspannung erfolgt. Ein solches Aktivierungssignal könnte beispielsweise im Falle eines CD-Players dann abgegeben werden, wenn das Gerät abspielbereit ist. Ebenso könnte ein Aktivierungssignal auch unmittelbar durch einen Benutzer oder eine Applikation abgegeben werden. Ebenso sind Aktivierungssignale von anderen Teilnehmern des Bussystems, insbesondere von einer zentralen Steuereinheit möglich. Die Aktivierung kann hier wahlweise durch gerichtete oder ungerichtete Kommunikation erfolgen.

Die Einfachheit eines erfindungsgemäßen Netzwerkes soll an einem Beispiel veranschaulicht werden: wird beispielsweise als erster Teilnehmer ein CD-Player an das Netzwerk angeschlossen, so beginnt er mit der Aussendung der Audiodaten von der CD an das Netzwerk. Da noch kein Empfänger am Netzwerk vorhanden ist, werden die Daten auch nicht weiter verwendet. Allerdings wird auch dem CD-Player keine Störung gemeldet, wie dies bei den üblichen Netzwerken mit gerichteter Kommunikation der Fall wäre, wenn der empfangende Teilnehmer nicht antworten würde. Wird zu einem späteren Zeitpunkt ein Audio-Verstärker an das Netzwerk angeschlossen, so sucht sich dieser einen für ihn verwendbaren Datenstrom. Er wird dann den Datenstrom des CD-Players erkennen und weiter empfangen. Wird nun noch ein Video-Display an das Netzwerk angeschlossen, so wird auch dieses einen kompatiblen Datenstrom, nämlich einen Video-Datenstrom suchen. Diesen kann es allerdings nicht finden, da noch keine Video-Quelle an das Netzwerk angeschlossen ist. Wird nun beispielsweise ein DVD- Player an das Netzwerk angeschlossen, so beginnt dieser mit der Aussendung von einem Video-Datenstrom, Dieser kann nun von dem Video-Display als kompatibel erkannt und zur Anzeige empfangen werden.

Ein erfindungsgemäßes Netzwerk ist vorzugsweise auf einem optischen Bussystem und wiederum vorzugsweise auf einem Ringbus aufgebaut. Besonders bevorzugt ist ein synchrones Bussystem, da nahezu ausschließlich mit einem solchen synchronen Bussystem Streamingdaten im Multicast oder Broadcast vertrieben werden können.

In einer weiteren vorteilhaften Ausgestaltung der Erfindung ist wenigstens ein Teilnehmer gleichzeitig als Sender und als Empfänger konfiguriert. Ein solcher Teilnehmer könnte beispielsweise ein Autoradio mit Rundfunkempfänger und Audioverstärker sein. Der Audioverstärker könnte in diesem Fall logisch vollständig von Rundfunkempfänger entkoppelt sein, da er einfach vorhandene Audiodaten, welche eben auch vom Rundfunkempfänger stammen können, vom Bus empfängt und wiedergibt. Der Audioverstärker muss hier nicht zwischen Daten vom Rundfunkempfänger und einer anderen Quelle, zum Beispiel einen CD-Player unterscheiden. Damit lässt sich eine wesentlich stärkere Modularisierung der einzelnen Geräte erreichen.

Eine weitere vorteilhafte Ausgestaltung der Erfindung sieht vor, dass wenigstens ein Teilnehmer wahlweise mehrere Empfänger und/oder mehrere Sender aufweist. Ein solcher Sender bzw. Empfänger muss nicht identisch mit dem physikalischen Netzwerkknoten (Teilnehmer) sein. So kann ein Empfänger beispielsweise ein weiteres Codec für bestimmte Audio- beziehungsweise videoformate sein. Ein Videodisplay mit integriertem Audioverstärker könnte beispielsweise als ein physikalischer Netzwerkknoten (Teilnehmer) ausgebildet sein und gleichzeitig verschiedene Codecs für Videoformate, wie beispielsweise AVI, DIVx oder MPEG sowie für Audioformate wie MP3 aufweisen. Damit ist eine breitere Auswahl aus den verschiedenen Datenströmen des Netzwerks möglich. Ist beispielsweise noch keine Videoquelle am Netzwerk angeschlossen, so könnte auch eine Audioquelle wiedergegeben werden. Selbst verständlich könnte auch aus mehreren Audio- und Videoquellen durch den Benutzer eine beliebige Audio- beziehungsweise Videoquelle ausgewählt werden.

Weiterhin kann ein Netzwerkteilnehmer auch als Wandler für Kodierungen eingesetzt werden. So könnte dieser beispielsweise einen Empfänger für unkomprimierte Videodaten aufweisen. Weiterhin könnte ein Sender vorgesehen sein, der die vom Empfänger empfangenen unkomprimierte Videodaten komprimiert an das Netzwerk aussendet. Ebenso könnte beispielsweise von einem empfangenen Videosignal die Audiosignale abgetrennt und als eigenständiges Signal auf das Netzwerk gegeben werden. Durch derartige Wandler kann auf einfache Art und Weise die Kompatibilität unterschiedlicher Geräte bezüglich der Kodierung hergestellt werden.

In einer weiteren vorteilhaften Ausgestaltung der Erfindung ist wenigstens ein Teilnehmer als Sender oder Empfänger zur Abfrage von zusätzlichen Informationen eines oder mehrerer Sender bzw. Empfänger ausgebildet.

Ebenso ist wenigstens ein Sender derart ausgebildet, dass er auf die Abfrage eines Empfängers hin diesem Informationen über verfügbare beziehungsweise aktuell gesendete Datenströme übermittelt. Alternativ hierzu könnte der Sender auch kontinuierlich oder in vorgegebener Zeitintervallen wesentliche Informationen über den ausgesendeten Datenstrom mit dem Datenstrom aussenden, welche dann von Empfängern auswertbar sind. In gleicher Weise können auch Informationen über den Betriebszustand eines Senders ausgegeben werden. Damit ist ein Empfänger in der Lage, einen oder mehrere Sender nach den aktuell gesendeten oder möglichen Datenströmen abzufragen. Die Abfrage kann hier wahlweise als ungerichtete Verbindung (Broadcast, Multicast) oder auch als gerichtete Verbindung erfolgen, wenn der Sender bekannt ist oder beispielsweise auf Grund eines empfangenen Datenstroms identifiziert werden kann. Die zwischen Sender und Empfänger ausgetauschten Informationen beziehen sich vorzugsweise auf die übertragenen Datenformate oder auch die Inhalte, wie beispielsweise Titel, Interpreten, Spieldauer etc. Die vom Sender abgegebenen Antworten auf Anfragen eines Empfängers können als diskrete Datenpakete versandt werden oder aber auch in den Datenstrom integriert sein. Ebenso könnten auch Sender derart konfiguriert sein, dass sie in bestimmten Zeitintervallen vorzugsweise durch Broadcasts Informationen über die von Ihnen ausgesendeten Streamingdaten verbreiten. In ähnlicher Weise könnten auch Empfänger Betriebszustände an Sender oder andere Netzteilnehmer signalisieren. Die Abfragen erfolgen bevorzugt über zumindest innerhalb des Netzwerkes standardisierte Mechanismen wie festgelegte Netzwerkadressen.

Wenigstens ein Empfänger ist derart gestaltet, dass er eine Funktion zur Auswertung der Inhalte bestimmter Datenströme aufweist und auf Grund der Auswertung für ihn kompatible Datenströme selektiert. Durch eine solche Funktion ist ein solcher Empfänger in der Lage, Datenströme bzw. bevorzugt deren Header auszuwerten und auf Kompatibilität zu den eigenen möglichen Datenformaten zu überprüfen. Identifiziert ein Empfänger einen für ihn kompatiblen Datenstrom, so kann der diesen wiedergeben.

Die Erfindung sieht vor, dass ein Empfänger derart ausgebildet ist, dass er im Falle mehrerer kompatibler Datenströme wenigstens die Selektion des oder der empfangende Datenströme auf Grund vorgegebener Prioritäten vornimmt. So hat beispielsweise ein Video-Display eine höhere Priorität für die Wiedergabe von Video- Streamingdaten gegenüber der Wiedergabe von Audio- Streamingdaten. Demnach wird beispielsweise ein Video-Display mit integriertem Audioverstärker versuchen, zunächst einen Video-Datenstrom wiederzugeben. Kann es allerdings auf dem Netzwerk keinen solchen Datenstrom identifizieren, so wird es dann einen verfügbaren Audio-Datenstrom wiedergeben. Wird zu einem späteren Zeitpunkt ein kompatibler Video-Datenstrom auf das Netzwerk gegeben, so könnte das Video-Display auf diesen umschalten. Weiterhin können auch unterschiedliche Datenformate der gleichen Kategorie mit unterschiedlichen Prioritäten belegt werden. So könnte das Video-Display beispielsweise von der Wiedergabe eines Video-Datenstroms mit niedriger Auflösung auf einen Video-Datenstrom mit hoher Auflösung, welche eine höhere Priorität besitzt, umschalten. Grundsätzlich kann die Steuerung der Wiedergabe auch nach anderen Kriterien erfolgen.

Eine andere Ausgestaltung der Erfindung sieht vor, dass die Selektion der Streamingdaten durch den Benutzer erfolgt. Vorteilhafterweise bietet der Empfänger dem Benutzer eine Auflistung der empfangbaren Streamingdaten an und überlässt ihm die Auswahl eines geeigneten Kanals beispielsweise in Form von einem Menü. Ebenso kann auch Vorteilhafterweise eine Auswahl der auf das Netzwerk gegebenes Streamingdaten eines Senders durch einen Benutzer erfolgen.

In einer anderen Ausgestaltung der Erfindung ist ein Teilnehmer, beispielsweise eine Steuereinheit vorgesehen, welche wahlweise die Aussendung von Streamingdaten einzelner Sender und/oder den Empfang von Streamingdaten einzelner Empfänger steuert. Eine solche Steuereinheit kann als eigenständige Einheit bzw. als eigenständiger Netzteilnehmer konfiguriert sein oder aber auch einem Sender und/oder Empfänger zugeordnet sein.

Diese Steuereinheit könnte beispielsweise einen in einem Netzwerk vorhandenen CD-Player zu Wiedergabe eines selektierten Musikstückes als Streamingdaten auf das Netzwerk auffordern. Weiterhin könnte hierzu ein entsprechender Audioverstärker zu Selektion der entsprechenden Streamingdaten angesteuert werden. Vorzugsweise ist die Steuereinheit derart ausgebildet, dass sie beispielsweise bei einem neuen Anschluss oder aber auch einer Aktivierung von Sendern bzw. Empfängern diese nach verschiedenen Parametern wie beispielsweise Daten-formate, verfügbare Titel etc. abfragt. Eine solche Abfrage könnte auch in bestimmten Intervallen durch Broadcasts erfolgen. Eine derartige Steuerung schließt auch die Steuerung der Senderbandbreite bzw. des Datenvolumens in das Netzwerk sowie auch eine Abschaltung oder Zuschaltung einzelner Sender und Empfänger auf das Netzwerk mit ein. Um diese Steuerfunktion wahrnehmen zu können ist eine Steuereinheit vorteilhafterweise zur Erkennung aktiver bzw. passiver Busteilnehmer (Sender oder Empfänger) ausgebildet. Weiterhin hat sie vorteilhafterweise wenigstens eine Funktion zur Signalisierung der aktiven bzw. passiven Sender bzw. Empfänger. Zur Vereinfachung der Steuerung ist die Steuereinheit vorzugsweise zur Etablierung vorgegebener Sender/Empfänger-Kombinationen ausgebildet. Diese können beispielsweise von außen oder auch durch einen Bediener eingestellt bzw. abgerufen werden. Ebenso können aber auch durch einen Benutzer, einen vorgegebenen logischen Ablauf, oder durch ein externes Signal beliebige Sender/Empfänger-Kombinationen hergestellt werden. In einer besonders vorteilhaften Ausgestaltung kann die Steuereinheit Bandbreitenkonflikte erkennen und auflösen. Eine Auflösung kann beispielsweise durch Vergrößerung der synchronen Bandbreite eines Netzwerks oder aber auch durch Reduktion der Bandbreite eines oder mehrerer Sender bzw. wie Deaktivierung eines oder mehrerer Sender erfolgen. Eine solche Auflösung kann durch einen Benutzer gesteuert oder nach gespeicherten Entscheidungskriterien herbeigeführt werden.

Eine andere Ausgestaltung der Erfindung sieht vor, dass wenigstens ein Sender eine Funktion zur Steuerung seiner Senderbandbreite beziehungsweise des Datenvolumens, insbesondere zu dessen Vergrößerung beziehungsweise Reduzierung aufweist. Diese Funktion wird vorzugsweise durch Empfänger gesteuert, welche beispielsweise bei einem Empfang dem entsprechenden Sender in bestimmten Zeitintervallen Informationen über den Empfang übermitteln. Dies ist vergleichbar mit einer Watchdog- Funktion. Werden beispielsweise innerhalb eines vorgegebenen Zeitintervalls (Timeout) keine Informationen über den Empfang mehr übermittelt, so kann der Sender davon ausgehen, dass er nicht weiter benötigt wird und entsprechend die Bandbreite reduzieren oder sich sogar selbst abschalten. Ebenso könnte er, wenn seine Daten nur eingeschränkt weiterverarbeitet werden können, diese mit reduzierter Bandbreite aussenden. Weiterhin könnte er beispielsweise durch einen Broadcast von Empfängern, welche neue Datenquellen suchen, wieder aktiviert werden. Ebenso könnte er auf Anfrage eines Empfängers hin seine Bandbreite und damit auch die Übertragungsqualität erhöhen. Alternativ zu einer Steuerung dieser Funktion durch Empfänger kann der Sender auch selbstständig feststellen ob bzw. wie die von ihm ausgesendeten Daten durch Empfänger empfangen bzw. genutzt werden. Dies kann beispielsweise auf Grund von Informationen aus Routing- Tabellen oder aber durch selektive Kommunikation, wie beispielsweise PING erfolgen. Weiterhin kann die Steuerung der Bandbreite selbstverständlich auch durch einen Benutzer oder eine Applikation erfolgen. So könnte ein Benutzer beispielsweise auch am Gerät selbst die gewünschte Bandbreite auswählen oder das Gerät sogar deaktivieren. Dabei kann ein deaktiviertes Gerät (Teilnehmer) wahlweise vollständig ausgeschaltet oder in einem Standby- Modus betrieben werden. So könnte ein solcher Teilnehmer zwar keine Streamingdaten mehr aussenden, aber immer noch auf Abfragen zusätzlicher Informationen oder anderen Netzwerkverkehr reagieren. Alternativ hierzu könnte ein deaktivierter Teilnehmer einen leeren Datenstrom (null- pattern) bzw. Datenstrom ohne Nutzinhalt, aber beispielsweise mit vorgegebenem oder Zufallsmuster (idle- pattern) aussenden.

In einer weiteren vorteilhaften Ausgestaltung der Erfindung ist wenigstens ein Sender derart ausgebildet, dass er selbstständig bei Überschreiten eines Grenzwertes der Netzwerkauslastung seine Senderbandbreite und damit den von ihm ausgesendeten Datenverkehr auf dem Netzwerk reduziert. Ebenso könnte die Reduzierung auch proportional oder nach einer anderen Funktion in Abhängigkeit von der Netzwerkauslastung erfolgen. Damit kann eine Überlastung des Netzwerks verhindert werden.

Ein weiterer Gegenstand der Erfindung ist die Ausbildung eines Teilnehmers als Sender für ein digitales Netzwerk, wie durch Anspruch 13 definiert.

Ein zusätzlicher Gegenstand der Erfindung ist die Ausbildung eines Teilnehmers als Empfänger für digitales Netzwerk, wie durch Anspruch 14 definiert.

Weiterhin ist Gegenstand der Erfindung ein Verfahren zum Betrieb eines Netzwerks wie durch Anspruch 15 definiert. Hierbei ist die zeitliche Abfolge von Anschluss bzw. Aktivierung eines Senders bzw. Empfängers unerheblich. So kann beispielsweise zuerst der Sender angeschlossen und aktiviert, sowie später der Empfänger angeschlossen und aktiviert werden. Ebenso könnte die Reihenfolge von Anschluss und Aktivierung zwischen Sender und Empfänger vertauscht werden. Auch kann beispielsweise zuerst ein Empfänger und dann ein Sender angeschlossen, dann der Empfänger aktiviert und zuletzt der Sender aktiviert werden. Es ist selbstverständlich, dass ein Empfang gültiger Daten erst nach deren Aussendung durch den Sender möglich ist.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.

Fig. 1 zeigt in allgemeiner Form schematisch eine erfindungsgemäße Vorrichtung.

Fig. 2 erläutert die Erfindung am Beispiel eines Ringbusses.

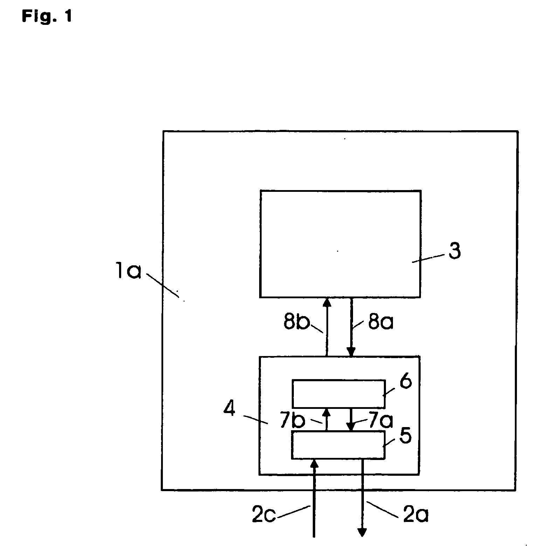

Fig. 1 zeigt in schematischer Form eine erfindungsgemäße Vorrichtung. Ein Netzwerkteilnehmer 1a (auch Netzwerkknoten genannt) weist Verbindungen 2a, 2b zur Kommunikation mit anderen Netzwerkteilnehmern auf. Die Kommunikation kann beispielsweise über optische sowie elektrische Verbindungen oder auch beispielsweise mittels Funkverbindungen erfolgen. Ebenso ist an Stelle der beiden skizzierten unidirektionalen Verbindungen auch eine bidirektionale Verbindung denkbar.

Weiterhin weist der Netzwerkteilnehmer ein Netzwerkinterface 4 sowie eine Applikation 3 auf. Die Applikation steht hier stellvertretend für eine Vielzahl unterschiedlicher Funktionalitäten des Netzwerkteilnehmers. So könnte diese beispielsweise ein Rundfunkempfänger, ein CD- oder DVD- Player oder auch eine Software zur Kodierung bzw. Umkodierung von Daten sein.

Das Netzwerkinterface 4 weist einen physikalischen Layer 5 auf, der die Kommunikationshardware zur physikalischen Verbindung mit anderen Netzwerkteilnehmern enthält. Weiterhin weist das Netzwerkinterface 4 Sender bzw. Empfänger 6 zur Aussendung bzw. zum Empfang von Daten auf. Eine Kommunikation von Sender bzw. Empfänger mit den Elementen des physikalischen Layers 5 erfolgt über die internen Kommunikationswege 7a, 7b. Eine Kommunikation der Applikation 3 ist über die externen Kommunikationswege 8a, 8b mit dem Netzwerkinterface 4 möglich.

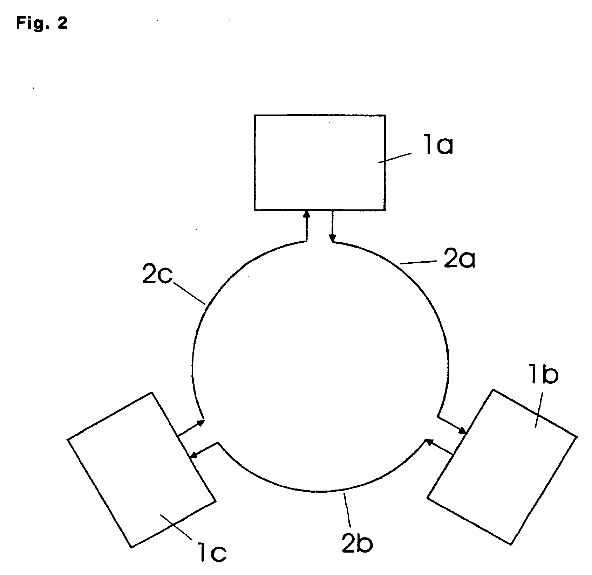

In Fig. 2 ist die Zusammenschaltung mehrerer Knoten in Form eines Ringbusses dargestellt. Die einzelnen Knoten 1a, 1b, 1c kommunizieren über die zu einem Ring zusammengeschalteten Verbindungen 2a, 2b, 2c. So kann der erste Knoten 1a mittels der ersten Verbindung 2a Informationen an den zweiten Knoten 1b übermitteln. Dieser kann Informationen über die zweite Verbindung 2b an den dritten Knoten 1c senden. Der Kreis wird durch die dritte Verbindung 2c zwischen dem dritten Knoten und dem ersten Knoten geschlossen.

### Bezugszeichenliste

- 1a, 1b, 1c: Netzwerkteilnehmer
- 2a, 2b, 2c: Verbindung zu anderen Netzwerkteilnehmern
- 3: Applikation
- 4: Netzwerkinterface
- 5: Physikalischer Layer
- 6: Sender bzw. Empfänger
- 7a, 7b: Kommunikationswege von Sender bzw. Empfänger mit dem Physikalischen Layer
- 8a, 8b: Kommunikationswege zwischen Netzwerk-interface und Applikation

## Patentansprüche

1. Digitales Netzwerk zur Kommunikation mehrerer Teilnehmer (1a, 1b, 1c) mittels Streamingdaten umfassend wenigstens einen Teilnehmer (1a) als Sender, welcher zur Aussendung von Daten in das Netzwerk ausgebildet ist sowie wenigstens einen Teilnehmer (1b) als Empfänger, welcher zum Empfang von Daten aus dem Netzwerk ausgebildet ist, wobei
der wenigstens eine Teilnehmer als Sender derart ausgebildet ist, dass er nach dessen Aktivierung automatisch Streamingdaten in Form von Broadcasts oder Multicasts sowie zusätzlichen Informationen über die Funktionalität und/oder des Status des Teilnehmers und/oder des Inhalts der von ihm ausgesandten Streamingdaten in das Netzwerk einspeist und der wenigstens eine Teilnehmer als Empfänger derart ausgebildet ist, dass er nach dessen Aktivierung automatisch einen für den Teilnehmer kompatiblen Datenstrom auswählt und dessen Streamingdaten vom Netzwerk liest, und dass der wenigstens eine Teilnehmer als Empfänger zum Empfang bzw. zur Auswertung der zusätzlichen Informationen weiterer Teilnehmer ausgebildet ist und dass er die Selektion der für ihn kompatiblen Datenströme aufgrund der zusätzlichen Informationen nach vorgegebenen Prioritäten vornimmt, wobei die Aktivierung eines Teilnehmers automatisch durch den Vorgang des Anschließens an das Netzwerk oder durch Anlegen einer Versorgungsspannung erfolgt.

2. Digitales Netzwerk nach einem der vorhergehenden Ansprüche,
**dadurch gekennzeichnet, dass**
wenigstens ein Teilnehmer (1a, 1b, 1c) mehrere Sender (6) und/oder mehrere Empfänger (6) aufweist.

3. Digitales Netzwerk nach einem der vorhergehenden Ansprüche,
**dadurch gekennzeichnet, dass**
wenigstens ein Teilnehmer (1a, 1b, 1c) zum Empfang von Streamingdaten und zur Aussendung der empfangenen Daten in umkodierter Form ausgebildet ist.

4. Digitales Netzwerk nach Anspruch 1,
**dadurch gekennzeichnet, dass**
wenigstens einer dieser Teilnehmer zur Aussendung der zusätzlichen Informationen als diskrete Datenpakete oder in die Streamingdaten integriert wahlweise als Unicast, Multicast oder Broadcast ausgebildet ist.

5. Digitales Netzwerk nach einem der vorhergehenden Ansprüche,
**dadurch gekennzeichnet, dass**
wenigstens ein Teilnehmer (1a, 1b, 1c) als Empfänger zur Aussendung von zusätzlichen Informationen über die Funktionalität und/oder des Status des Teilnehmers ausgebildet ist.

6. Digitales Netzwerk nach einem der vorhergehenden Ansprüche,
**dadurch gekennzeichnet, dass**
wenigstens ein Teilnehmer (1a, 1b, 1c) eine Funktion zur gezielten Abfrage der zusätzlichen Informationen weiterer Teilnehmer aufweist.

7. Digitales Netzwerk nach einem der vorhergehenden Ansprüche,
**dadurch gekennzeichnet, dass**
wenigstens ein Teilnehmer als Empfänger derart gestaltet ist, dass eine Selektion der zu empfangenden Datenströme von aktivierten bzw. deaktivierten Sendern durch einen Benutzer erfolgt und der Teilnehmer diesem vorzugsweise die Auswahl beispielsweise in Form eines Menüs aus einer Auflistung kompatibler Datenströme anbietet.

8. Digitales Netzwerk nach einem der vorhergehenden Ansprüche,
**dadurch gekennzeichnet, dass**
wenigstens ein Sender wenigstens eine Funktion zur Anpassung seiner Senderbandbreite, insbesondere zur Erhöhung und/oder Reduzierung der Senderbandbreite sowie wahlweise zur Deaktivierung aufweist.

9. Digitales Netzwerk nach Anspruch 8,
**dadurch gekennzeichnet, dass**
wenigstens ein Sender wenigstens eine Funktion zur Analyse der Nutzung der von ihm ausgesandten Daten wie die Abfrage von anderen Netzwerkteilnehmern, insbesondere Empfängern oder die Auswertung von Routingtabellen aufweist.

10. Digitales Netzwerk nach Anspruch 8 bzw. 9,
**dadurch gekennzeichnet, dass**
wenigstens ein Sender wenigstens eine Funktion zu seiner Deaktivierung oder zumindest zur Reduzierung seiner Senderbandbreite für den Fall aufweist, dass dessen Signal von keinem Empfänger empfangen wird.

11. Digitales Netzwerk nach einem der vorhergehenden Ansprüche,
**dadurch gekennzeichnet, dass**
wenigstens ein Teilnehmer vorgesehen ist, welcher Teilnehmer wahlweise einzeln oder auch in Gruppen als Sender bzw. Empfänger steuert und diese gegebenenfalls aktiviert beziehungsweise deaktiviert.

12. Digitales Netzwerk nach einem der vorhergehenden Ansprüche,
**dadurch gekennzeichnet, dass**
wenigstens ein Teilnehmer vorgesehen ist, welcher wenigstens einen Sender bzw. Empfänger entsprechend steuert, um bestimmte Daten als Streamingdaten auf das Netzwerk zu senden bzw. bestimmte Streamingdaten vom Netzwerk zu empfangen und somit vorzugsweise die Zuordnung von Sendern und Empfängern festlegt.

13. Teilnehmer für ein digitales Netzwerk nach Anspruch 1,
wobei
der Teilnehmer als Sender derart ausgebildet ist, dass er nach dessen Aktivierung automatisch Streamingdaten in Form von Broadcasts oder Multicasts in das Netzwerk einspeist und dass der Teilnehmer als Sender zur Aussendung von zusätzlichen Informationen über die Funktionalität und/oder des Status des Teilnehmers und/oder des Inhalts der von ihm ausgesandten Streamingdaten ausgebildet ist, wobei die Aktivierung automatisch durch den Vorgang des Anschließens an das Netzwerk oder durch Anlegen einer Versorgungsspannung erfolgt.

14. Teilnehmer für ein digitales Netzwerk nach Anspruch 1,
wobei
der Teilnehmer als Empfänger derart ausgebildet ist, dass er nach dessen Aktivierung automatisch einen für den Teilnehmer kompatiblen Datenstrom auswählt und dessen Streamingdaten vom Netzwerk liest und dass der wenigstens eine Teilnehmer als Empfänger zum Empfang bzw. zur Auswertung der zusätzlichen Informationen weiterer Teilnehmer ausgebildet ist und dass er die Selektion der für ihn kompatiblen Datenströme aufgrund der zusätzlichen Informationen nach vorgegebenen Prioritäten vornimmt, wobei die Aktivierung automatisch durch den Vorgang des Anschließens an das Netzwerk oder durch Anlegen einer Versorgungsspannung erfolgt.

15. Verfahren zum Betrieb eines Netzwerks entsprechend dem Oberbegriff des Anspruchs 1, mit den Schritten:
- Anschluss wenigstens eines als Sender ausgebildeten Netzwerkteilnehmers an das Netzwerk,
- Aktivierung des als Sender ausgebildeten Netzwerkteilnehmers,
- Aussendung von Streamingdaten sowie von zusätzlichen Informationen über die Funktionalität und/oder des Status des Teilnehmers und/oder des Inhalts der von ihm ausgesandten Streamingdaten durch den als Sender ausgebildeten Netzwerkteilnehmer sowie Anschluss wenigstens eines als Empfänger ausgebildeten Netzwerkteilnehmers und Aktivierung dieses Netzwerkteilnehmers, und
- Auswahl und Empfang von kompatiblen Streamingdaten des Netzwerks sowie der zusätzlichen Informationen weiterer Teilnehmer durch diesen Netzwerkteilnehmer,
und wobei die Selektion der für ihn kompatiblen Datenströme aufgrund der zusätzlichen Informationen nach vorgegebenen Prioritäten stattfindet, und wobei die Aktivierung eines Netzwerkteilnehmers automatisch durch den Vorgang des Anschließens an das Netzwerk oder durch Anlegen einer Versorgungsspannung erfolgt.

## Claims

1. Digital network for communication between a plurality of subscribers (1a, 1b, 1c) by means of streaming data, comprising at least one subscriber (1a) as a transmitter that is designed to emit data into the network, and also at least one subscriber (1 b) as a receiver that is designed to receive data from the network,
wherein
the at least one subscriber is designed as a transmitter, so that subsequent to its activation it automatically feeds streaming data in the form of broadcasts or multicasts and also additional information about the functionality, and/or the status of the subscriber.and/or the contents of its transmitted streaming data into the network, and the at least one subscriber is designed as a receiver, so that subsequent to its activation it automatically selects a data stream compatible with the subscriber and reads the streaming data thereof from the network, and the at least one subscriber is designed as a receiver for receiving or evaluating the additional information from other subscribers and performs the selection of compatible data streams on the basis of the additional information according to given priorities, with the activation of a subscriber being effected automatically by the operation of connection to the network, or by application of a supply voltage.

2. Digital network according to any one of the preceding claims,
**characterized in that**
at least one subscriber (1a, 1b, 1c) comprises a plurality of transmitters (6) and/or a plurality of receivers (6).

3. Digital network according to any one of the preceding claims,
**characterized in that**
at least one subscriber (1a, 1b, 1c) is adapted to receive streaming data and to emit the received data in a re-coded form.

4. Digital network according to claim 4,
**characterized in that**
at least one of these subscribers is designed to emit the additional information as discrete data packages, or as incorporated in the streaming data optionally as unicast, multicast or broadcast.

5. Digital network according to any one of the preceding claims,
**characterized in that**
at least one subscriber (1a, 1b, 1c) is designed as a receiver for emitting additional information on the functionality and/or the status of the subscriber.

6. Digital network according to any one of the preceding claims,
**characterized in that**
at least one subscriber (1a, 1b, 1c) has a function of specifically querying the additional information of other subscribers.

7. Digital network according to any one of the preceding claims,
**characterized in that**
at least one subscriber is designed as a receiver, so that a selection of the data streams to be received from activated or deactivated transmitters is effected by a user, to whom the subscriber preferably offers a choice, for example in the form of a menu from a listing of compatible data streams.

8. Digital network according to any one of the preceding claims,
**characterized in that**
at least one transmitter has at least one function of adapting its transmission bandwidth, in particular for increasing and/or reducing the transmission bandwidth, and optionally also for deactivation.

9. Digital network according to any one of the preceding claims,
**characterized in that**
at least one transmitter has at least one function for analysis of the utilization of the data emitted by it, such as the interrogation of other network subscribers, in particular receivers, or the evaluation of routing tables.

10. Digital network according to any one of the preceding claims,
**characterized in that**
at least one transmitter has at least one function for its deactivation or at least for reducing its transmission bandwidth in the case of its signal not being received by any receiver.

11. Digital network according to any one of the preceding claims,
**characterized in that**
at least one subscriber is provided for controlling subscribers, optionally singly or also in groups, as transmitters or receivers, and activating or deactivating them as may be the case.

12. Digital network according to any one of the preceding claims,
**characterized in that**
at least one subscriber is provided for suitably controlling at least one transmitter or receiver in order to transmit particular data as streaming data into the network, or to receive particular streaming data from the network, and thus to establish a preferable assignment of transmitters and receivers.

13. Subscriber to a digital network of claim 1,
wherein
the subscriber is designed as a transmitter, so that subsequent to its activation it automatically feeds streaming data in the form of broadcasts or multicasts into the network, and the subscriber is designed as a transmitter for emitting additional information on the functionality and/or the status of the subscriber and/or the contents of the streaming data emitted by it, with the activation being effected automatically by the operation of connection to the network or by application of a supply voltage.

14. Subscriber to a digital network of claim 1,
wherein
the subscriber is designed as a receiver, so that subsequent to its activation it automatically selects a data stream compatible with the subscriber and reads its streaming data from the network, and the at least one subscriber is designed as a receiver for receiving or for evaluating the additional information of other subscribers, and performs the selection of the data streams compatible with it on the basis of the additional information according to given priorities, with the activation being automatically effected by the operation of connection to the network or by application of a supply voltage.

15. Method for operating a network that corresponds to the preamble of claim 1, comprising the steps:
- connection of at least one network subscriber designed as a transmitter to the network,
- activation of the network subscriber designed as a transmitter,
- emission of streaming data and also of additional information on the functionality and/or the status of the subscriber and/or the content of its emitted streaming data by the network subscriber designed as a transmitter and also connection of at least one network subscriber designed as a receiver and activation of this network subscriber, and
- choosing and receiving compatible streaming data from the network and also the additional information of other subscribers by this network subscriber,
with the selection of the data streams compatible with it occurring on the basis of the additional information according to given priorities, and with the activation of a network subscriber being effected automatically by the operation of connection to the network or by application of a supply voltage.

## Revendications

1. Réseau numérique pour la communication de plusieurs appareils connectés (1a, 1b, 1c) au moyen de données de streaming, comprenant au moins un appareil connecté (1a) servant d'émetteur, qui est conçu pour émettre des données dans le réseau, ainsi qu'au moins un appareil connecté (1b) servant de récepteur, qui est conçu pour recevoir des données du réseau,
dans lequel l'au moins un appareil connecté servant d'émetteur est conçu de telle façon qu'après son activation, il fournit automatiquement au réseau des données de streaming en diffusion générale ou multiple ainsi que des informations supplémentaires sur le fonctionnement et/ou l'état de l'appareil connecté et/ou du contenu des données de streaming qu'il émet et l'au moins un appareil connecté servant de récepteur est conformé de telle façon qu'après son activation, il sélectionne automatiquement un flux de données compatible avec l'appareil connecté et lit les données de streaming de celui-ci dans le réseau, et dans lequel l'au moins un appareil connecté servant de récepteur est conçu pour recevoir et analyser les informations supplémentaires d'autres appareils connectés et réalise la sélection des flux de données compatibles avec lui sur la base des informations supplémentaires selon des priorités prédéfinies, l'activation d'un appareil connecté étant effectuée automatiquement par la procédure de connexion au réseau ou par l'application d'une tension d'alimentation.

2. Réseau numérique selon l'une des revendications précédentes, **caractérisé en ce qu'**au moins un appareil connecté (1a, 1b, 1c) comporte plusieurs émetteurs (6) et/ou plusieurs récepteurs (6).

3. Réseau numérique selon l'une des revendications précédentes, **caractérisé en ce qu'**au moins un appareil connecté (1a, 1b, 1c) est conçu pour recevoir des données de streaming et pour émettre les données reçues sous forme recodée.

4. Réseau numérique selon la revendication 1, **caractérisé en ce qu'**au moins un de ces appareils connectés est conçu pour émettre les informations supplémentaires sous forme de paquets de données discrets ou intégrées dans les données de streaming, au choix en diffusion unique, multiple ou générale.

5. Réseau numérique selon l'une des revendications précédentes, **caractérisé en ce qu'**au moins un appareil connecté (1a, 1b, 1c) servant de récepteur est conçu pour émettre des informations supplémentaires sur le fonctionnement et/ou l'état de l'appareil connecté.

6. Réseau numérique selon l'une des revendications précédentes, **caractérisé en ce qu'**au moins un appareil connecté (1a, 1b, 1c) présente une fonction pour la consultation ciblée des informations supplémentaires d'autres appareils connectés.

7. Réseau numérique selon l'une des revendications précédentes, **caractérisé en ce qu'**au moins un appareil connecté servant de récepteur est conçu de telle manière qu'une sélection des flux de données à recevoir d'émetteurs activés ou désactivés soit effectuée par un utilisateur et l'appareil connecté propose de préférence la sélection à ce dernier sous la forme, par exemple, d'un menu composé à partir d'une liste de flux de données compatibles.

8. Réseau numérique selon l'une des revendications précédentes, **caractérisé en ce qu'**au moins un émetteur présente au moins une fonction pour l'adaptation de sa bande passante d'émission, en particulier pour augmenter et/ou réduire la bande passante d'émission et, au choix, pour sa désactivation.

9. Réseau numérique selon la revendication 8, **caractérisé en ce qu'**au moins un émetteur présente au moins une fonction pour l'analyse de l'utilisation des données qu'il a émises comme l'interrogation d'autres appareils connectés au réseau, en particulier de récepteurs, ou l'analyse de tableaux de routage.

10. Réseau numérique selon la revendication 8 ou 9, **caractérisé en ce qu'**au moins un émetteur présente au moins une fonction pour sa désactivation ou du moins pour la réduction de sa bande passante d'émission dans le cas où son signal n'est reçu par aucun récepteur.

11. Réseau numérique selon l'une des revendications précédentes, **caractérisé en ce qu'**il est prévu au moins un appareil connecté qui commande au choix des appareils connectés seuls ou en groupe comme émetteurs ou comme récepteurs et les active ou désactive le cas échéant.

12. Réseau numérique selon l'une des revendications précédentes, **caractérisé en ce qu'**il est prévu au moins un appareil connecté qui commande au moins un émetteur ou récepteur de façon à émettre certaines données dans le réseau sous forme de données de streaming ou à recevoir certaines données de streaming du réseau et qui détermine ainsi de préférence l'affectation d'émetteurs et de récepteurs.

13. Appareil connecté pour un réseau numérique selon la revendication 1, dans lequel l'appareil connecté est conformé comme un émetteur de telle façon qu'après son activation, il fournisse automatiquement des données de streaming au réseau en diffusion générale ou multiple et l'appareil connecté servant d'émetteur est conçu pour émettre des informations supplémentaires sur le fonctionnement et/ou le statut de l'appareil connecté et/ou du contenu des données de streaming qu'il émet, l'activation se faisant automatiquement par le processus de raccordement au réseau ou par l'application d'une tension d'alimentation.

14. Appareil connecté pour un réseau numérique selon la revendication 1, dans lequel l'appareil connecté est conçu comme un récepteur de telle façon qu'après son activation, il sélectionne automatiquement un flux de données qui lui est compatible et lit les données de streaming de celui-ci sur le réseau et l'au moins un appareil connecté servant de récepteur est conçu pour recevoir et analyser les informations supplémentaires d'autres appareils connectés et réalise la sélection des flux de données qui lui sont compatibles sur la base des informations supplémentaires selon des priorités prédéfinies, l'activation se faisant automatiquement par le processus de raccordement au réseau ou par l'application d'une tension d'alimentation.

15. Procédé pour l'exploitation d'un réseau selon le préambule de la revendication 1, comprenant les étapes suivantes :
- raccordement au réseau d'au moins un appareil connecté au réseau conçu comme un émetteur ;
- activation de l'appareil connecté au réseau conçu comme un émetteur ;
- émission par l'appareil connecté au réseau conçu comme un émetteur de données de streaming et d'informations supplémentaires sur le fonctionnement et/ou le statut de l'appareil connecté et/ou le contenu des données de streaming qu'il émet et raccordement d'au moins un appareil connecté au réseau conçu comme un récepteur et activation de cet appareil connecté au réseau ; et
- sélection et réception de données de streaming compatibles du réseau et des informations supplémentaires d'autres appareils connectés par cet appareil connecté au réseau,
- la sélection des flux de données qui lui sont compatibles s'effectuant sur la base des informations supplémentaires selon des priorités prédéfinies, et l'activation d'un appareil connecté au réseau se faisant automatiquement par le processus de raccordement au réseau ou par l'application d'une tension d'alimentation.
